# EUROPEAN PATENT APPLICATION

(11) **EP 1 343 104 A1**
(43) Date of publication of application: **10.09.2003**
(21) Application number: 03004931.6
(22) Date of filing: 07.03.2003
(51) Int. Cl.: G06F 17/60

(54) **Consulting contract settling system and method, recording medium, and computer data signal**

(30) Priority: 08.03.2002 JP 2002063594
(71) Applicant: Ricoh Company, Ltd., Tokyo 143-8555 (JP)
(72) Inventor: Matsuda, Shuuji, Shinagawa-ku, Tokyo 142-0062 (JP); Ikezawa, Toyoji, Yokohama-shi, Kanagawa 227-0066 (JP); Koide, Masano, Aoba-ku, Yokohama-shi, Kanagawa 227-0043 (JP)
(74) Representative: Schwabe - Sandmair - Marx

(57) **Abstract**

A consulting contract settling system has a server (10) for settling a contract offering a consulting service on lease, and a contract information DB (2). Consulting information, user information regarding parties concerned in a contract, contract information regarding content, price, and contract term of a consulting service arc stored in the DB (2). An information setting unit (11) of the server (10) receives input of information regarding at least one of content (part or all), price, and contract term of a consulting service, and retrieves the other information than the input information. An individual information registration unit (12) generates based on the input and retrieved information, and registers in the DB (2), individual contract information. A contract form output unit (13) outputs contract form data based on the individual contract information. A notification unit (15) sends notification for prompting contract renewal to an advisee's client apparatus before contract term expiration.

## Description

The present invention relates to a system, etc. for settling a consulting contract for providing a consulting service as a trade article.

Each corporation requires various machines and equipment in order to operate and maintain the corporate system. The same goes for individual business proprietors. Currently, many types of machines and equipment including OA (office automation) equipment, computers, industrial machine tools, medical instruments, transportation machines, etc. are offered on lease, By utilizing a lease contract, companies and other organizations can avoid paying a huge cost at one time and thus can operate at a uniform expense. Further, since the payment for the lease contract can be included in the necessary expenses, accounting procedures can be simplified and management can be rationalized.

Costs for machines and equipment, and costs for installation and maintenance of these machines and equipment can be paid by installments. As compared to this, costs for management consultation and computers such as software development are basically paid in one lump sum. This gives a serious financial impact on companies, etc. Therefore, in some cases, when advisees such as companies, enterprisers, and individuals who need consultation settle a consulting contract with advisors (consultants) such as consulting companies, consulting firms, etc., they choose to shorten the contract term against their wishes, because of this financial burden. This has been a great loss for both of the parties concerned in the consulting contract.

The present invention was made in view of the above-described circumstance. Accordingly, an object of the present invention is to provide a consulting contract settling system and method which can allow an advisee to settle a consulting contract in which the advisee needs not to pay the consulting fee in one lump sum, and a recording medium and a computer data signal therefor.

Another object of the present invention is to provide a consulting contract settling system and method which can allow a consultant to achieve a long-term consulting contract, and a recording medium and a computer data signal therefor.

To achieve the above objects, a consulting contract settling system according to a first aspect of the present invention is a consulting contract settling system for settling a consulting contract in which a consulting service is offered on lease, characterized by comprising:
a database (2) in which user information regarding a party concerned in a consulting contract and contract information regarding the consulting contract and including information on a content, a price, and a contract term of a consulting service are registered in association with each other;
a reception unit (11) which receives an input of at least one kind of information among information regarding a part or all of a content, a price, and a contract term of a consulting service;
a retrieval unit (11) which retrieves the other kind(s) of information than the input information among a part or all of the content, the price, and the contract term of the consulting service, by searching the contract information in the database (2) based on the input information;
a registration unit (12) which generates predetermined individual contract information by using the input information and the retrieved information regarding a part or all of the content, the price, and the contract term of the consulting service, and registers the generated individual contract information in the database (2);
an output unit (13) which outputs contract form data which is generated based on the individual contract information registered in the database (2); and
a notification unit (15) which gives a notification for prompting contract renewal for the consulting service, before the contract term indicated by the individual contract information registered in the database (2) expires.

The consulting contract settling system may further comprise a registration unit (16) which registers result information regarding a result of the consulting service in the database (2) in association with the individual, contract information corresponding to the consulting service, and the retrieval unit (11) may reflect a content of the result information registered in the database (2) on the price of the consulting service which is the retrieval target.

The consulting contract settling system may further comprise a registration unit (16) which registers result information regarding a result of the consulting service in the database (2) in association with the individual contract information corresponding to the consulting service, and the retrieval unit (11) may reflect the result information registered in the database (2) on a price of a renewed consulting contract for an advisee associated with the result information.

A consulting contract settling system according to a second aspect of the present invention is a consulting contract settling system having a server (10) for settling a consulting contract in which a consulting service is offered on lease, the system characterized by comprising:
a database (2) in which user information regarding a party concerned in a consulting contract and contract information regarding the consulting contract and including information regarding a content, a price, and a contract term of a consulting service are registered in association with each other,
characterized in that the server (10) comprises:
a reception unit (11) which receives an input of at least one kind of information among information regarding a part or all of a content, a price, and a contract term of a consulting service;
a retrieval unit (11) which retrieves the other kind(s) of information than the input information among a part or all of the content, the price, and the contract term of the consulting service by searching the contract information in the database (2) based on the input information;
a registration unit (12) which generates predetermined individual contract information by using the input information and the retrieved information regarding a part or all of the content, the price, and the contract term of the consulting service, and registers the generated individual contract information in the database (2);
an output unit (13) which outputs contract form data generated based on the individual contract information registered in the database (2); and
a notification unit (15) which sends a notification for prompting contract renewal for the consulting service to a client apparatus of an advisee concerned in a renewed consulting contract through a network, before the contract term indicated by the individual contract information registered in the database (2) expires.

The server (10) may further comprise a registration unit (16) which receives result information regarding a result of the consulting service from the client apparatus of the advisee, and registers the received result information in the database (2) in association with the individual contract information corresponding to the consulting service and the retrieval unit (11) may reflect a content of the result information registered in the database (2) on the price of the consulting service which is the retrieval target.

The server (10) may further comprise a registration unit (16) which receives result information regarding a result of the consulting service from the client apparatus of the advisee, and registers the received result information in the database (2) in association with the individual contract information corresponding to the consulting service and the retrieval unit (11) may reflect the result information registered in the database (2) on a price of a renewed consulting contract for the advisee associated with the result information.

The server (10) may further comprise an extraction unit (17) which receives data representing a content of a consulting service desired by an advisee from a client apparatus of the advisce through the network, and extracts information regarding a content of a consulting service which is similar to the content represented by the received data and the retrieval unit (11) may regard the extracted content of the consulting service as the input information.

The notification unit (15) may send information for prompting an advisee to confirm at least one of a consulting contract and a renewed consulting contract, to a client apparatus of the advisee through the network.

The output unit (13) may output data representing a contract form for settling a renewed consulting contract.

The registration unit (12) may generate a content of a consulting service offered under a renewed consulting contract, by revising a content of a consulting service offered under a consulting contract registered in the database (2), in accordance with an input from an advisor.

Registering of the revised content of the consulting service may trigger a notification by the notification unit (15) for prompting an advisee concerned in the consulting contract to renew the consulting contract.

The consulting contract settling system may further comprise a fee calculation unit (11) which calculates a lease fee for a renewed consulting contract, by adding an unpaid amount of a lease fee for a consulting contract to an original price of the renewed consulting contract.

A lease contract regarding the consulting service may be settled via a leasing company which is different from an advisor.

A part or all of the content of the consulting service may be based on application software.

A consulting contract settling system according to a third aspect of the present invention is a consulting contract settling system having a server (10) for settling a consulting contract in which a consulting service is offered on lease, characterized by comprising:
a database (2) in which user information regarding a party concerned in a consulting contract and contract information regarding the consulting contract and including information on a content, a price, and a contract term of a consulting service are registered in association with each other;
a reception unit (11) which receives an input of at least one kind of information among information regarding a part or all of a content, a price, and a contract term of a consulting service;
a retrieval unit (11) which retrieves the other kind(s) of information than the input information among a part or all of the content, the price, and the contract term of the consulting service by searching the contract information in the database (2) based on the input information;
a registration unit (12) which generates predetermined individual contract information by using the input information and the retrieved information regarding a part or all of the content, the price, and the contract term of the consulting service, and registers the generated individual contract information in the database (2);
an output unit (13) which outputs contract form data generated based on the individual contract information registered in the database (2); and
a confirmation unit (15) which performs a process for prompting a client apparatus of an advisee to confirm the consulting contract through a network.

A consulting contact settling method according to a fourth aspect of the present invention is a consulting contract settling method of settling a consulting contract in which a consulting service is offered on lease, characterized by comprising:
a first registering step of registering user information regarding a party concerned in a consulting contract and contract information regarding the consulting contract and including information on a content, a price, and a contract term of a consulting service in association with each other;
a step of receiving an input of at least one kind of information among information regarding a part or all of a content, a price, and a contract term of a consulting service;
a step of retrieving the other kind(s) of information than the input information among a part or all of the content, the price, and the contract term of the consulting service, by searching the contract information registered in the first registering step based on the input information;
a second registering step of generating predetermined individual contract information by using the input information and the retrieved information regarding a part or all of the content, the price, and the contract term of the consulting service, and registering the generated individual contract information;
a step of outputting contract form data generated based on the individual contract information registered in the second registering step; and
a step of giving a notification for prompting contract renewal for the consulting service, before the contract term indicated by the individual contract information registered in the second registering step expires.

A recording medium according to a fifth aspect of the present invention stores a program for controlling a computer to execute:
a first registering step of registering contract information regarding a consulting contract in which a consulting service is offered on lease and including information on a content, a price, and a contract term of the consulting service, and user information regarding a party concerned in the consulting contract in association with each other;
a step of receiving an input of at least one kind of information among information regarding a part or all of a content, a price, and a contract term of a consulting service;
a step of retrieving the other kind(s) of information than the input information among a part or all of the content, the price, and the contract term of the consulting service, by searching the contract information registered in the first registering step based on the input information;
a second registering step of generating predetermined individual contract information by using the input information and the retrieved information regarding a part or all of the content, the price and the contract term of the consulting service, and registering the generated individual contract information;
a step of outputting contract form data generated based on the individual contract information registered in the second registering step; and
a step of giving a notification for prompting contract renewal for the consulting service, before the contract term indicated by the individual contract information registered in the second registering step expires.

A computer data signal according to a sixth aspect of the present invention represents a program for controlling a computer to function as:
a first registration unit (2) which registers contract information regarding a consulting contract in which a consulting service is offered on lease and including information on a content, a price, and a contract term of the consulting service, and user information regarding a party concerned in the consulting contract in association with each other;
a reception unit (11) which receives an input of at least one kind of information among information regarding a part or all of a content, a price, and a contract information of a consulting service;
a retrieval unit (11) which retrieves the other kind(s) of information than the input information among a part or all of the content, the price, and the contract term of the consulting service, by searching the registered contract information based on the input information;
a second registration unit (12) which generates predetermined individual contract information by using the input information and the retrieved information regarding a part or all of the content, the price, and the contract term of the consulting service, and registers the generated individual contract information;
an output unit (13) which outputs contract form data generated based on the registered individual contract information; and
a notification unit (15) which gives a notification for prompting contract renewal for the consulting service, before the contract term indicated by the registered individual contract information expires.

These objects and other objects and advantages of the present invention will become more apparent upon reading of the following detailed description and the accompanying drawings in which:
FIG. 1 is a diagram showing a structure of a consulting contract settling system according to a first embodiment of the present invention;
FIG. 2 is a diagram showing an example of an output of contract form data;
FIG. 3 is a diagram showing an example of a structure of an information processing apparatus;
FIG. 4 is a diagram showing a structure of a consulting contract settling system according to a second embodiment of the present invention; and
FIG. 5 is a diagram showing a structure of a consulting contract settling system according to a third embodiment of the present invention.

Embodiments of the present invention will now be explained with reference to the drawings.

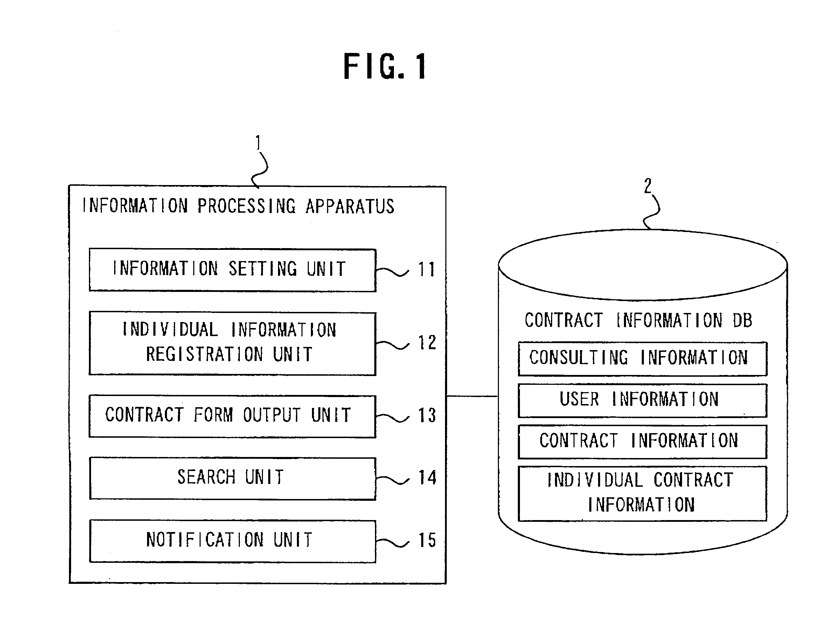

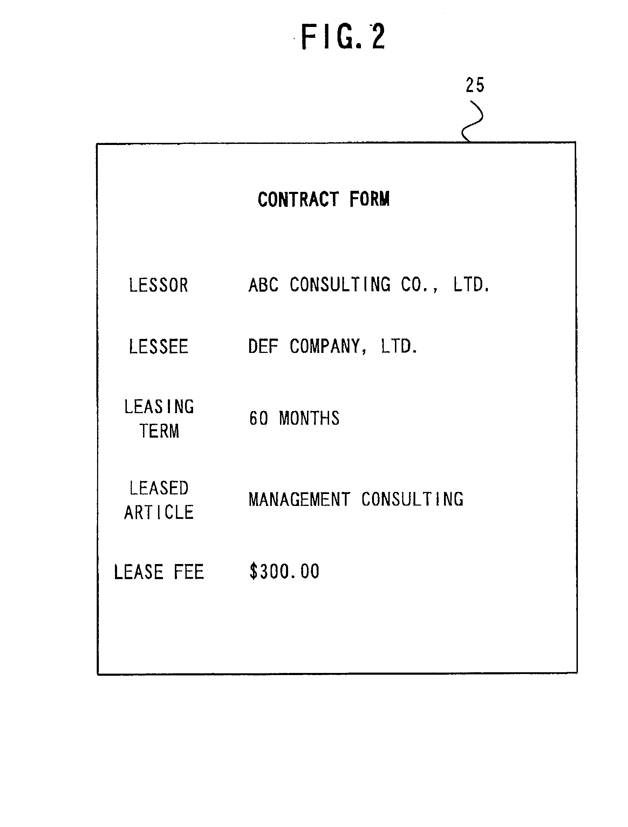

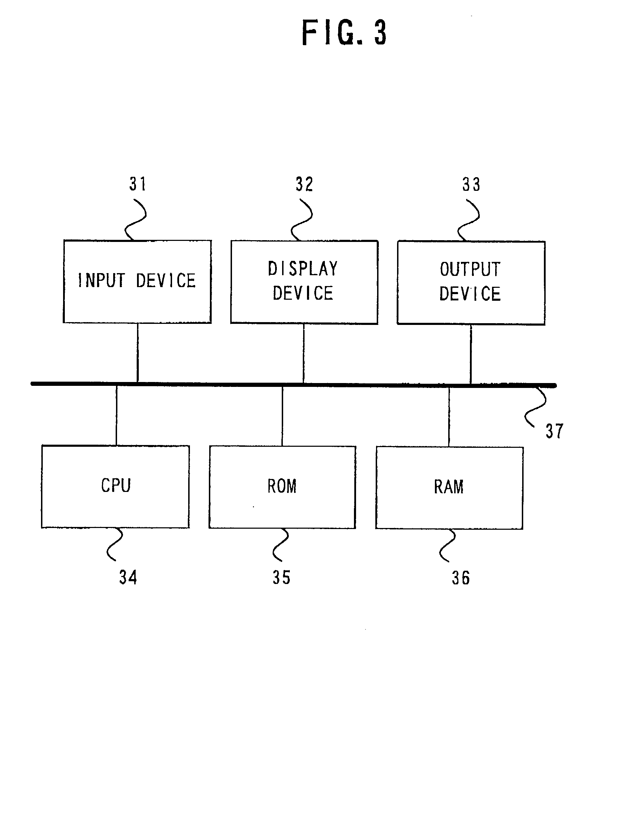

FIG. 1 is a diagram for explaining the structure of a consulting contract settling system according to a first embodiment of the present invention. FIG. 2 is a diagram showing one example of a contract form which is output from this consulting contract settling system. FIG. 3 is a diagram showing the structure of an information processing apparatus 1 which is used in the consulting contract settling system.

The consulting contract settling system according to the present embodiment is a system for settling a consulting contract for providing a consulting service as a lease contract. According to this system, a contract form 25, for example, one that is shown in FIG. 2 is ultimately generated and output. A lease contract according to this embodiment is basically one that is treated as a lease contract in tax affairs, but may include other types of contracts. Consulting services according to the present embodiment include various kinds of consultations such as consultations for management, improvement of workers' skills, software developments, civil engineering and construction, environmental solutions, etc. Further, a part or all of the contents of consultations may be based on application software. And the contents of consultations may include know-how, etc.

As shown in FIG. 1, this consulting contract settling system comprises an information processing apparatus 1, and a contract information database (DB) 2. The contract information DB 2 stores consulting information 21, user information 22, contract information 23, individual contract information 24, etc. The consulting information 21 includes various information on the contents of consulting, and information on consulting services provided by consulting service providers (consultants) who utilize this system. The user information 22 is information regarding advisees and advisors (consultants) who are concerned in consulting contracts, and includes basic personal information such as name (corporate name), address, phone number, facsimile number, e-mail address, etc. In a case where an advisee is a corporation, it is preferable that the user information 22 further include various information to make the consulting service more effective, such as number of workers, managing system, capital, current management situation, etc. The contract information 23 is information regarding consulting contracts, and is registered in the contract information DB 2 in association with user information of the parties concerned in each contract. The contract information 23 at least includes information regarding content, price, contract term, etc. of the consulting service.

Further, the contract information 23 may have a data structure including links to each information (content, price, contract term, etc. of the consulting service).

The information processing apparatus 1 of the present consulting contract settling system comprises at least an information setting unit 11, an individual information registration unit 12, a contract form output unit 13, a search unit 14, and a notification unit 15. The information processing apparatus 1 may realize each of the units 11 to 15 by executing a program stored in a later-described storage unit such as a ROM, etc. It is preferable that this program include use of a graphical user interface so that handling of these units 11 to 15 can be easy for users.

FIG. 3 shows an example of the structure of the information processing apparatus 1. The information processing apparatus 1 is, for example, a general-purpose computer, and comprises an input device 31, a display device 32, an output device 33, a CPU 34, a ROM 35, and a RAM 36 as principal components. The information processing apparatus 1 may further comprise a storage unit such as a hard disk, etc. The input device 31 has a keyboard and mouse for inputting information, a recording medium reader, and a network device for accepting input from other devices. The display device 32 has a display such as CRT or LCD for displaying a search result or other information. The output device 33 has a printer, a network device, a recording device for recording media, etc. The ROM 35 stores programs for realizing each of the above-described units 11 to 15, and data necessary for various processes, etc. The CPU 34 executes the programs stored in the ROM 35. The RAM 36 is used as an area for executing the programs. These principal components 31 to 36 are connected to one another via a data bus 37.

The information setting unit 11 performs a process for allowing an advisor to designate at least one conditional information among at least a part (or all) of the content of consulting, the price for consulting, the contract term of the consulting service, receiving input of the designated information, and searching the contract information DB 2 based on the input information to retrieve information other than those designated among the content of consulting, the price for consulting, and the contract term of the consulting service. The number of the kinds of information that are designated and input by users is arbitrary. That is, the information setting unit 11 performs a process for retrieving undesignated information by using one or more of the content (part or all), price, contract term of consulting as a parameter/parameters. For example, if the designated information represents the price and contract term of consulting, the information setting unit 11 uses the information as parameters and searches the registered data (for example, the contract information 23, etc.) in the contract information DB 2 to specify corresponding registered information. Then, the information setting unit 11 may extract information regarding the content of consulting from the specified registered information. In a case where the designated information represents the content (part or all) and price of consulting, the information setting unit 11 may use the information as parameters, specify corresponding registered information by searching the registered data (for example, the contract information 23, etc.) in the contract information DB 2, and extract information regarding the contract term of consulting from the specified registered information. The contract term and price may be computed based on designated information. The computing method is arbitrary. For example, a predetermined formula for computing the contract term or the price with the use of other parameters may be used. Or, the target value may be computed by using a result of searching the contract information DB 2 (for example, searching out any contract information that corresponds to input designation about consulting content from the contract information DB 2, and then computing the price based on the ratio hetween the contract term specified in the scarched-out contract information and the designated contract term). Further, the date for renewing the contract may be computed based on the contract term obtained or computed in some way. The information setting unit 11 sets the information other than those designated, which is obtained based on the designated information among the content, price, and contract term of consulting, as information used for generating later-described individual contract information, in response to an input of "OK" announcement from the advisor or automatically. The information setting unit 11 may further comprise a function for receiving input of information for specifying the advisor and advisee. For example, the information setting unit 11 may allow the advisor to select his/her identification information from a list of the user information 22 registered in advance.

The individual information registration unit 12 generates the individual contract information 24, by using the information input by the advisor and the information set by the information setting unit 11 based on the input information, and registers the generated individual contract information 24 in the contract information DB 2. According to the present system, conditions of the contract (content, price, and contract term of consulting) can be determined based on incomplete information designated by the party concerned (advisor) based on the relationship among the content, price, and contract term of consulting, and the determined conditions can be registered as the individual contract information 24 in the contract information DB 2. Further, the individual information registration unit 12 can add further information or change the registered information in accordance with a request for addition or change input by the advisor (or advisor and advisee). For example, the individual information registration unit 12 may receive input of information for specifying any individual contract information 24, and read Out the corresponding individual contract information 24 based on the input information, and display the registered information. Then, the individual information registration unit 12 may further receive input of the content of addition or change, and update the individual contract information 24 based on the input content. This is because the required content of consulting changes in accordance with requests from the parties concerned and situations. Addition to or change of the registered information may be performed by the function of the information setting unit 11. And it is desirable that the individual contract information 24 registered in the contract information DB 2 include data to be written on a contract form (in case of the contract form 25 shown in FIG. 2, lessee, lessor, leasing term, leased article, lease fee, etc.) Further, it is desirable that data on contract conditions suited to the contract be added to the individual contract information 24.

The contract form output unit 13 reads out the individual contract information 24 registered in the contract information DB 2, generates data representing a contract form based on the read information, and outputs the generated data, in response to a request for outputting a contract form which is input from the input device 31 or automatically at a predetermined timing. The method for generating the data representing the contract form is arbitrary. For example, the read individual contract information 24 and format data for the contract form which is registered in advance may be combined. When receiving input of a request for outputting a contract form, the contract form output unit 13 may receive input of information for specifying the output-target individual contract information 24, and then read out the target individual contract information 24 based on the input specification information. The output means includes display of the contract form on the display device, print-out, transfer of the data to another apparatus through a network, etc.

The search unit 14 searches for requested information stored in the contract information DB 2 when receiving input of search conditions from the advisor (or advisor and advisee), and presents (displays or outputs) the search result.

The notification unit 15 gives a notification for prompting renewal of the consulting contract indicated by each individual contract information 24 registered in the contract information DB 2, before the contract term indicated by the individual contract information 24 expires. The timing to give the notification is arbitrary. For example, the notification may be given for each individual contract information 24, at a timing such as when a predetermined period (for example, one month) is left before the expiration date. Or, for each individual contract information 24, the advisor may be allowed to input and set the notification timing (in this case, when no notification timing is set by the advisor, the default value may be used). The notification means is arbitrary, and includes display of the information for prompting contract renewal, alarming, transfer of the information for prompting contract renewal to another apparatus (for example, a computer possessed by the advisor or the advisee) through a network, etc.

"Contract renewal" here is different in its concept from "extension of leasing term (continuous lease)" which is done when the leasing term expires. Further, due to the intangibility of the consulting service, the idea of buying out the article does not apply here. Therefore, it goes without saying that there is no need of buying the article at the time of the expiration of the leasing term. According to the present embodiment, it is good enough to consider that intangible properties involved in consulting are moved to the advisee during the leasing term and returned to the advisor when the leasing term expires. "Contract renewal" according to the present embodiment refers to a new consulting contract pertinent to the consulting service offered under the former contract, Because of its nature, the consulting service is fulfilled with a contract term of, generally, several months to one year. However, in some cases, the service might be continuously fulfilled even after the expiration of the contract. In these cases, contract renewal is performed. "Contract renewal" includes a new contract for a step V in a case where the former contract includes steps I to V, and the planned contract term expires when the processes up to step IV arc completed (in this case, normally, an additional contract fee is not required). "Contract renewal" also includes a new contract for further steps (step VI and thereafter) in a case where processes up to step V are completed in the planned contract term. In this respect, the present consulting contract settling system can also be referred to as "contract renewal system".

To add to the above, according to the present embodiment, in a case where a lease contract for a five-year consulting service is settled, the payment for this service is not by one lump sum. When the first six months elapse, it is possible to receive a consulting service offered under an add-on "renewed contract" with the fee for the remaining 4.5-year service. Further, in this example, although the initial contract term is five years, the consulting service itself is carried out substantially for six months. When this six-month period passes, the advisce might decide not to renew the contract. Therefore, although it is not desirable for the advisor, repayment of the lease fee for the unfulfilled service to the advisee may he set up as a condition for canceling the contract, so that when the advisee cancels the contract when a predetermined period (six months, for example) passes, he/she may be exempted from the lease fee for the following service. In consideration of this variety of contract patterns, the advisor who utilizes the present system usually proposes a consulting service to a customer under a "renewed contract", with the past base indicated by the information registered in the contract information DB 2 taken into consideration. This makes it difficult for others (other consulting service providers) to intervene between the advisor and advisee who have once had a consulting contract with each other. Further, since the advisee continuously pays fees to the same advisor, there is a high possibility that contract renewal will be repeated. Therefore, the possibility that the advisor will succeed in enclosing the customer is high. As a result, the advisor can expand the circle of customers. In addition, from the viewpoint of the advisor, the development cost for the consulting service can be counted as an expense not as a fixed asset, unlike the case of leasing ordinary articles.

In the consulting contract settling system according to the present embodiment, the contract form output unit 13 may have a function for outputting data representing a contract form for settling a renewed contract. For example, the information setting unit 11 may receive advisor's designations for any of the content, price, and contract term of a consulting service, and obtain information other than the designated information. Then, the individual information registration unit 12 may generate individual contract information for a renewed contract, by using the designated information and the obtained information. Finally, the contract form output unit 13 may output the individual contract information for the renewed contract. Further, in response to an input of a predetermined request, the individual information registration unit 12 may allow the advisor to input information for specifying a contract (current contract) prior to a renewed contract, and read out the corresponding individual contract information 24 among the individual contract information registered in the contract information DB 2. Then, after a new individual contract information is generated by updating the contract term indicated in the read-out individual contract information 24 to a new contract term input by the advisor, the contract form output unit 13 may generate data representing a contract form based on the new individual contract information, and output the generated data.

The information processing apparatus 1 may further comprise an information registration unit for receiving input of the consulting information 21, the user information 22, the contract information 23, etc., and for registering the input information in the contract information DB 2. This information registration unit may be realized by the CPU 34 executing a program stored in the storage unit such as the ROM 35.

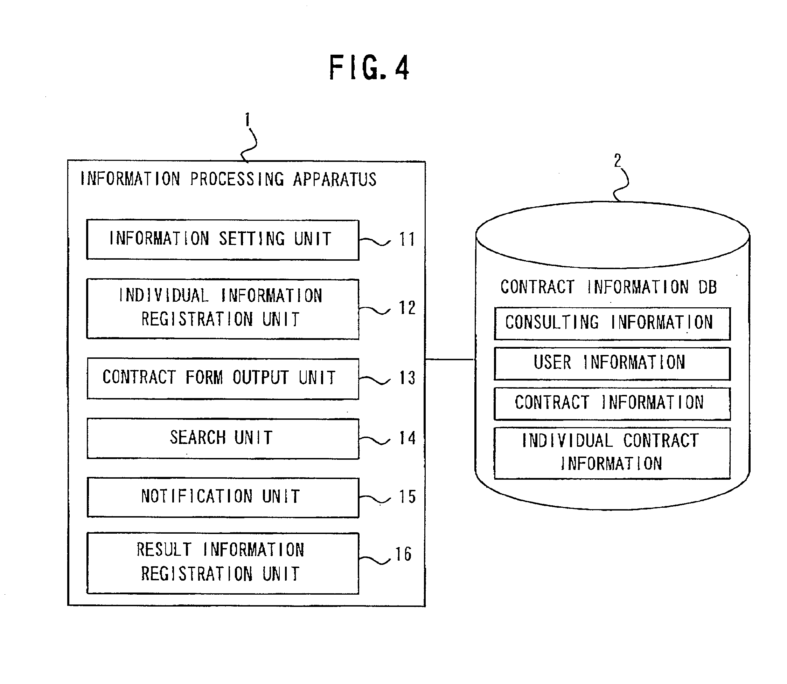

Next, the second embodiment of the present invention will be explained. FIG. 4 is a diagram showing the structure of a consulting contract settling system according to the second embodiment of the present invention. This consulting contract settling system comprises a result information registration unit 16, in addition to the units included in the consulting contract settling system according to the above-described first embodiment (see FIG. 1). The result information registration unit 16 receives input of result information representing the consulting result of each consulting contract settled in this system, and stores the result information in the contract information DB 2 in association with the corresponding individual contract information. The result information is information representing the result of a consulting service. For example, in case of a consulting service relating to software, the result information includes the result of introducing the software proposed in the consulting service. The data structure of the result information is arbitrary, For example, the advisor may set a value for each of one or more items for indicating the consulting result (such as degree to which the object is achieved, degree of customer satisfaction, whether or not sales figure increases (in case of a consulting service regarding sales), etc.).

According to the second embodiment, the information setting unit 11 has a function for reflecting the result information stored by the result information registration unit 16 on the price of a consulting service. With this function, the result of consulting for an advisee can be reflected on consultation for other advisees.

For example, in a case where the advisor inputs at least one kind of information among the content, price, and contract term of a consulting service, the information setting unit 11 uses information for identifying the advisor and advisee which is input earlier as a search key and reads out corresponding individual contract information 24 and result information associated with the individual contract information 24 from the contract information DB 2. Then, information other than the input information is obtained based on the read-out information, the obtained information is presented (displayed or output). At this time, in a case where the information input by the advisor does not include price information, an updated price is calculated in accordance with a predetermined formula (for example, by using a pre-registered formula, etc.). The calculation method is arbitrary. For example, let a case be considered where the content of the result information indicates that the consulting service has achieved some positive results, such as a case where the value for each item included in the result information is equal to or greater than a predetermined value. In this case, a price which is obtained by increasing the original price by a predetermined ratio may be presented. Otherwise, the original price as is may be presented. In a case where the input information includes price information and the result information indicates that the consulting service has achieved some positive results, a price obtained by increasing the input price by a predetermined ratio may be presented together with the information other than the input information. Further, for example, the information setting unit 11 may reflect the result information stored in the contract information DB 2 by the result information registration unit 16, upon a consulting price which is designated or obtained/set when the advisee associated with the result information settles a renewed consulting contract. For example, in a case where the advisor inputs at least one kind of information among the content, price, and contract term of a consulting service in order to generate individual contract information for a renewed contract, the information setting unit 11 uses information for identifying the advisor and advisee which is input earlier as a search key and reads out the corresponding individual contract information 24 and the result information associated with the individual contract information 24 from the contract information DB 2. Then, the information other than the input information is presented based on the read-out information. At this time, in a case where the information input by the advisor does not include price information, the price for the renewed contract is calculated in accordance with a predetermined formula. The calculation method is arbitrary. For example, in a case where the content of the result information indicates that the consulting service has achieved some positive results, such as a case where a result value for each item included in the result information is equal to or greater than a predetermined value, a price obtained by increasing the price for the former contract by a predetermined ratio may he presented as the price for the renewed contract. Otherwise, the price for the former contract as is may be presented. Further, in a case where the input information includes price information and the result information indicates that the consulting service has achieved some positive results, a price obtained by increasing the input price by a predetermined ratio may be presented together with the presentation of the information other than the input information Due to this, it is possible to calculate the price for the renewed contract by associating the price for the former contract with the result information.

In a case where the registered result information indicates that the advisee has gotten a rise in profits as a result of a consulting service under a contract, the information processing apparatus 1 may perform a process for taking steps such as settling a renewed contract, superseding the current contract, settling a renewed contract with a reduced price, etc., by, for example, sending a notification for prompting at least one of the parties concerned to choose which to do next.

It is preferred that the content of the consulting service offered under a renewed contract be the revision of the content of consulting under the current consulting contract. In this case, for example, the individual information registration unit 12 may read out information regarding the content of consulting under the current contract from the contract information DB 2 in response to a predetermined input from the advisor (for example, input of information for specifying the individual contract information 24 corresponding to the current contract). Then, the individual information registration unit 12 may receive an input for revising the read-out content information, revise the content of consulting based on the input data, and generate and register individual contract information 24 adjusted to this revision. Further, in a case where the advisor inputs data for revising the content of consulting and the individual information registration unit 12 registers individual contract information 24 adjusted to the revision in the contract information DB 2, this registering of the individual contract information 24 adjusted to the revision may trigger an action of the notification unit 15 for specifying the advisee concerned in the current consulting contract and giving the specified advisee a notification for prompting him/her to renew the contract (this notification includes data transmission to the advisee's computer). Storing (registering) of the data for content-revision input by the advisor may trigger this action.

The information setting unit 11 may calculate the lease fee for a renewed contract, by adding an unpaid amount for the former (i.e., current) consulting contract to the original price of consulting under the renewed contract. Then, the notification unit 15 may notify the calculated lease fee to at least one of the parties concerned. The information setting unit 11 may calculate the tax imposed on a lease contract and reflect the calculated tax on the lease fee, and the notification unit 15 may notify the tax-reflected lease fee to at least one of the parties concerned.

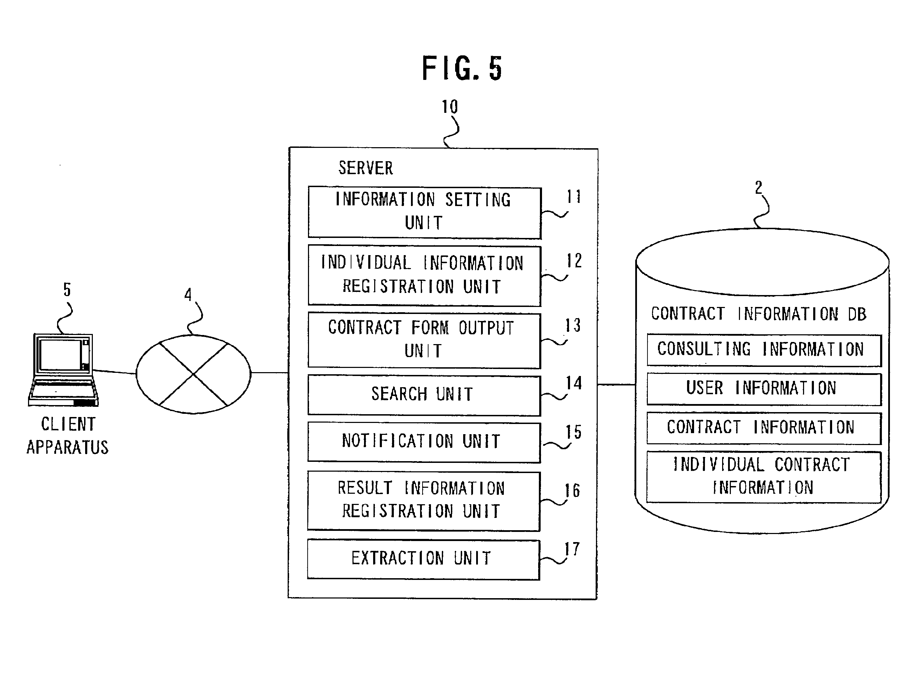

Next, the third embodiment of the present invention will be explained. FIG. 5 is a diagram showing the structure of a consulting contract settling system according to the third embodiment of the present invention. This consulting contract settling system comprises a server apparatus 10 having a function of the consulting contract settling system of the above-explained second embodiment. The present system is constituted by connecting the server 10 to a client apparatus 5 used by the advisor or advisee, for enabling information exchange between these apparatuses. In particular, the notification unit 15 in the present system sends a notification (message data, etc.) for prompting contract renewal for a consulting contract indicated by each individual contract information 24 registered in the contract information DB 2 to a client apparatus 5 possessed by an advisee involved in the renewed contract, before the contract term indicated by the individual contract information 24 expires. The timing to send the notification may be the same as that described in the first embodiment.

The server 10 is a computer having a function as a server for receiving an advisee's connection request from the client apparatus 5 (for example, a web server in case of Internet connection), a function as a verification server for verifying each advisee (and also advisor in some case), and a function as a DB administration server for administrating the contract information DB 2, etc. The server 10 stores programs for realizing the function of each server (web server, verification server, DB administration server, etc.) in a storage unit. The server 10 may be realized by one computer, or the plural server functions may be realized by a plurality of computers distributedly. Further, the server 10 may he realized by a computer maintained and installed by an ASP (application service provider). Then, necessary applications may be supplied to the computer of each consulting service provider from the server of the application service provider through a network.

Various types of networks can he used as a network 4 shown in FIG. 5. For example, a cable, a non-cable system, a private line, an optical fiber line, a telephone line, internet, an intranet, an extranet, a WAN (wide area network), a MAN (metropolitan area network), a LAN (local area network), etc. may be employed as the network 4. It is desirable that various kinds of security enhancing means be used in network communications, such as using a private line, encrypting data to be transmitted, verifying a user of each client apparatus 5, etc.

The result information registration unit 16 included in this system receives result information representing the result of a consulting service from the client apparatus 5 used by an advisee, etc., and stores the received information in the contract information DB 2 in association with the individual contract information corresponding to this consulting service.

The notification unit 15 may connect to the network 4, and perform a process for prompting the client apparatus 5 of an advisee to confirm a contract or a renewed contract. For example, the notification unit 15 may prompt confirmation of a contract or a renewed contract by, for example, sending a web page or an e-mail indicative of a contract in which the advisee is involved or the content of the contract to the client apparatus 5 of the advisee. The notification unit 15 may receive an answer showing the confirmation result from the client apparatus 5 of the advisee.

An extraction unit 17 included in the present system receives information representing the content of a desired consulting service requested by an advisee from the client apparatus 5 through the network 4. Then, the extraction unit 17 compares the received information representing the desired content with a content of a consulting service stored in the contract information DB 2, and extracts a similar content. The extraction method is arbitrary, For example, the extraction unit 17 may extract a keyword from the received text data, and extract a consulting service that includes the extracted keyword in its content. The advisor designates the content of the extracted consulting service by advisee via the information setting unit 11 or the search unit 14, etc., and anytime thereafter the advisor can offer the consulting service having the content desired by the advisee.

The server 10 may not comprise the result information registration unit 16. Further, the server 10 may not comprise the extraction unit 17.

In the system according to each embodiment explained with reference to FIGS. 1 to 5, a lease contract may be settled between an advisee and a business in a field different from consulting (for example, a leasing company). Such a contract pattern is preferred in a case where the presence of a leasing company benefits the advisee more, in terms of taxation. For example, an environment suitable for such a contract pattern may be built up by connecting a computer at the leasing company to the consulting contract settling system through a network, so that necessary information exchange concerned with consulting can be performed between the computer at the leasing company and client 5.

The fee for a consulting service may be settled on a network. The fee settling method is arbitrary. Settling by electronic money, money transfer between bank accounts, and other various methods may be employed.

The units 11 to 15 included in the consulting contract settling system according to each embodiment may not he realized by a single apparatus, but may be distributedly realized by a plurality of apparatuses.

The consulting contract settling system according to each embodiment may not comprise the search unit 14.

Further, in each embodiment, the contract information DB 2 may he included in the information processing apparatus 1 or in the server 10. Moreover, the contract information DB 2 may not be included in the information processing apparatus 1 or in the server 10, hut may be prepared in another computer existing on a network to which the information processing apparatus 1 or the server 10 is connected, so that it may be accessible from the information processing apparatus 1 or from the server 10.

The consulting contract settling system according to each embodiment of the present invention has been explained. The present invention includes a consulting contract settling method for performing the processes included in each embodiment, a signal representing a program for controlling a computer to function as the server or client apparatus shown in each embodiment, or for controlling a computer to execute processes of the server or client apparatus, and a computer-readable recording medium storing such a program, etc.

The recording medium according to the present invention which stores a program and data for realizing the function for settling a consulting contract includes, for example, a CD-ROM, a magneto-optical disk, a DVD-ROM, an FD, a flash memory, a memory stick, and other various types of ROM and RAM. The function of the present system can be easily realized by recording a program for controlling a computer to execute the function of the system according to each embodiment of the present invention on a recording medium and distributing the recording medium. The function for settling a consulting contract according to the present invention can be realized by installing the recording medium to an information processing apparatus constituted by a computer, etc. and actuating the information processing apparatus to read out the program recorded on the recording medium, or by storing the program in a recording medium comprised in the information processing apparatus and controlling the information processing apparatus to read out the stored program.

Further, according to the present invention, by utilizing a consulting service on lease, the advisee can be freed from paying the consulting fee (lease fee) by one lump sum and can divide the payment, thereby reducing the financial, burden during the contract term. On the other hand, the advisor can achieve a consulting contract which will last for a long period because of the reduced financial burden on the advisee.

Various embodiments and changes may be made thereunto without departing from the broad spirit and scope of the invention. The above-described embodiments are intended to illustrate the present invention, not to limit the scope of the present invention. The scope of the present invention is shown by the attached claims rather than the embodiments. Various modifications made within the meaning of an equivalent of the claims of the invention and within the claims are to be regarded to be in the scope of the present invention.

## Claims

1. A. consulting contract settling system for settling a consulting contract in which a consulting service is offered on lease, **characterized by** comprising:
a database (2) in which user information regarding a party concerned in a consulting contract and contract information regarding the consulting contract and including information on a content, a price, and a contract term of a consulting service are registered in association with each other;
a reception unit (11) which receives an input of at least one kind of information among information regarding a part or all of a content, a price, and a contract term of a consulting service;
a retrieval unit (11) which retrieves the other kind(s) of information than the input information among a part or all of the content, the price, and the contract term of the consulting service, by searching the contract information in said database (2) based on the input information;
a registration unit (12) which generates predetermined individual contract information by using the input information and the retrieved information regarding a part or all of the content, the price, and the contract term of the consulting service, and registers the generated individual contract information in said database (2);
an output unit (13) which outputs contract form data which is generated based on the individual contract information registered in said database (2); and
a notification unit (15) which gives a notification for prompting contract renewal for the consulting service, before the contract term indicated by the individual contract information registered in said database (2) expires.

2. The consulting contract settling system according to claim 1, **characterized by** further comprising a registration unit (16) which registers result information regarding a result of the consulting service in said database (2) in association with the individual contract information corresponding to the consulting service,
**characterized in that** said retrieval unit (11) reflects a content of the result information registered in said database (2) on the price of the consulting service which is the retrieval target.

3. The consulting contract settling system according to claim 1, **characterized by** further comprising a registration unit (16) which registers result information regarding a result of the consulting service in said database (2) in association with the individual contract information corresponding to the consulting service,
**characterized in that** said retrieval unit (11) reflects the result information registered in said database (2) on a price of a renewed consulting contract for an advisee associated with the result information.

4. A consulting contract settling system having a server (10) for settling a consulting contract in which a consulting service is offered on lease, said system **characterized by** comprising:
a database (2) in which user information regarding a party concerned in a consulting contract and contract information regarding the consulting contract and including information regarding a content, a price, and a contract term of a consulting service are registered in association with each other,
**characterized in that** said server (10) comprises:
a reception unit (11) which receives an input of at least one kind of information among information regarding a part or all of a content, a price, and a contract term of a consulting service;
a retrieval unit (11) which retrieves the other kind(s) of information than the input information among a part or all of the content, the price, and the contract term of the consulting service by searching the contract information in said database (2) based on the input information;
a registration unit (12) which generates predetermined individual contract information by using the input information and the retrieved information regarding a part or all of the content, the price, and the contract term of the consulting service, and registers the generated individual contract information in said database (2);
an output unit (13) which outputs contract form data generated based on the individual contract information registered in said database (2); and
a notification unit (15) which sends a notification for prompting contract renewal for the consulting service to a client apparatus of an advisee concerned in a renewed consulting contract through a network, before the contract term indicated by the individual contract information registered in said database (2) expires.

5. The consulting contract settling system according to claim 4, **characterized in that**:
said server (10) further comprises a registration unit (16) which receives result information regarding a result of the consulting service from said client apparatus of the advisee, and registers the received result information in said database (2) in association with the individual contract information corresponding to the consulting service; and
said retrieval unit (11) reflects a content of the result information registered in said database (2) on the price of the consulting service which is the retrieval target.

6. The consulting contract settling system according to claim 4, **characterized in that**:
said server (10) further comprises a registration unit (16) which receives result information regarding a result of the consulting service from said client apparatus of the advisee, and registers the received result information in said database (2) in association with the individual contract information corresponding to the consulting service; and
said retrieval unit (11) reflects the result information registered in said database (2) on a price of a renewed consulting contract for the advisee associated with the result information.

7. The consulting contract settling system according to claim 4, **characterized in that**:
said server (10) further comprises an extraction unit (17) which receives data representing a content of a consulting service desired by an advisee from a client apparatus of the advisee through said network, and extracts information regarding a content of a consulting service which is similar to the content represented by the received data; and
said retrieval unit (11) regards the extracted content of the consulting service as the input information.

8. The consulting contract settling system according to claim 4,
**characterised in that** said notification unit (15) sends information for prompting an advisee to confirm at least one of a consulting contract and a renewed consulting contract, to a client apparatus of the advisee through said network.

9. The consulting contract settling system according to claim 4,
**characterized in that** said output unit (13) outputs data representing a contract form for settling a renewed consulting contract.

10. The consulting contract settling system according to claim 4,
**characterized in that** said registration unit (12) generates a content of a consulting service offered under a renewed consulting contract, by revising a content of a consulting service offered under a consulting contract registered in said database (2), in accordance with an input from an advisor.

11. The consulting contract settling system according to claim 10,
**characterized in that** registering of the revised content of the consulting service triggers a notification by said notification unit (15) for prompting an advisee concerned in the consulting contract to renew the consulting contract.

12. The consulting contract settling system according to claim 4, **characterized by** further comprising a fee calculation unit (11) which calculates a lease fee for a renewed consulting contract, by adding an unpaid amount of a lease fee for a consulting contract to an original price of the renewed consulting contract.

13. The consulting contract settling system according to claim 4,
**characterized in that** a lease contract regarding the consulting service is settled via a leasing company which is different from an advisor.

14. The consulting contract settling system according to claim 4,
**characterized in that** a part or all of the content of the consulting service is based on application software.

15. A consulting contract settling system having a server (10) for settling a consulting contract in which a consulting service is offered on lease, **characterized by** comprising:
a database (2) in which user information regarding a party concerned in a consulting contract and contract information regarding the consulting contract and including information on a content, a price, and a contract term of a consulting service are registered in association with each other;
a reception unit (11) which receives an input of at least one kind of information among information regarding a part or all of a content, a price, and a contract term of a consulting service;
a retrieval unit (11) which retrieves the other kind(s) of information than the input information among part or all of the content, the price, and the contract term of the consulting service by searching the contract information in said database (2) based on the input information;
a registration unit (12) which generates predetermined individual contract information by using the input information and the retrieved information regarding a part or all of the content, the price, and the contract term of the consulting service, and registers the generated individual contract information in said database (2);
an output unit (13) which outputs contract form data generated based on the individual contract information registered in said database (2); and
a confirmation unit (15) which performs a process for prompting a client apparatus of an advisee to confirm the consulting contract through a network.

16. A consulting contract settling method for settling a consulting contract in which a consulting service is offered on lease, **characterized by** comprising:
a first registering step of registering user information regarding a party concerned in a consulting contract and contract in formation regarding the consulting contract and including information on a content, a price, and a contract term of a consulting service in association with each other;
a step of receiving an input of at least one kind of information among information regarding a part or all of a content, a price, and a contract term of a consulting service;
a step of retrieving the other kind(s) of information than the input information among a part or all of the content, the price, and the contract term of the consulting service, by searching the contract information registered in said first registering step based on the input information;
a second registering step of generating predetermined individual contract information by using the input information and the retrieved information regarding a part or all of the content, the price, and the contract term of the consulting service, and registering the generated individual contract information;
a step of outputting contract form data generated based on the individual contract information registered in said second registering step; and
a step of giving a notification for prompting contract renewal for the consulting service, before the contract term indicated by the individual contract information registered in said second registering step expires.

17. A computer-readable recording medium storing a program for controlling a computer to execute:
a first registering step of registering contract information regarding a consulting contract in which a consulting service is offered on lease and including information on a content, a price, and a contract term of the consulting service, and user information regarding a party concerned in the consulting contract in association with each other;
a step of receiving an input of at least one kind of information among information regarding a part or all of a content, a price, and a contract term of a consulting service;
a step of retrieving the other kind(s) of information than the input information among a part or all of the content, the price, and the contract term of the consulting service, by searching the contract information registered in said first registering step based on the input information;
a second registering step of generating predetermined individual contract information by using the input information and the retrieved information regarding a part or all of the content, the price and the contract term of the consulting service, and registering the generated individual contract information;
a step of outputting contract form data generated based on the individual contract information registered in said second registering step; and
a step of giving a notification for prompting contract renewal for the consulting service, before the contract term indicated by the individual contract information registered in said second registering step expires.

18. A computer data signal embedded in a carrier wave and representing a program for controlling a computer to function as:
a first registration unit (2) which registers contract information regarding a consulting contract in which a consulting service is offered on lease and including information on a content, a price, and a contract term of the consulting service, and user information regarding a party concerned in the consulting contract in association with each other;
a reception unit (11) which receives an input of at least one kind of information among information regarding a part or all of a content, a price, and a contract information of a consulting service;
a retrieval unit (11) which retrieves the other kind(s) of information than the input information among a part or all of the content, the price, and the contract term of the consulting service, by searching the registered contract information based on the input information;
a second registration unit (12) which generates predetermined individual contract information by using the input information and the retrieved information regarding a part or all of the content, the price, and the contract term of the consulting service, and registers the generated individual contract information;
an output unit (13) which outputs contract form data generated based on the registered individual contract information; and
a notification unit (15) which gives a notification for prompting contract renewal for the consulting service, before the contract term indicated by the registered individual contract information expires.
